# EUROPÄISCHE PATENTANMELDUNG

(11) **EP 4 137 737 A1**
(43) Veröffentlichungstag der Anmeldung: **22.02.2023**
(21) Anmeldenummer: 22184104.2
(22) Anmeldetag: 11.07.2022
(51) Int. Cl.: F17C 11/00, G01M 3/40, G08B 21/16, B60L 50/60

(54) **VERFAHREN UND ANORDNUNG ZUR ERKENNUNG EINER WASSERSTOFFLECKAGE, COMPUTERPROGRAMMPRODUKT SOWIE VERWENDUNG EINES ABSORPTIONSMITTELS**

(30) Priorität: 14.07.2021 DE 102021118143
(71) Anmelder: Vaillant GmbH, 42859 Remscheid NRW (DE)
(72) Erfinder: Salg, Frank, 42897 Remscheid (DE); Badenhop, Thomas, 42499 Hückeswagen (DE); Grabe, Jochen, 51688 Wipperfürth (DE); Paul, Michael, 58332 Schwelm (DE)
(74) Vertreter: Popp, Carsten

(57) **Zusammenfassung**

Die Erfindung betrifft ein Verfahren und eine Anordnung zur Erkennung einer Wasserstoffleckage in einer mit Wasserstoff betreibbaren Einrichtung (1; 2; 3), wobei eine vorgebbare Menge an Sorptionsmittel (10.1, 10.2; 11; 12; 13) für Wasserstoff in mindestens einem Bereich (27; 28; 29; 30) der Einrichtung (1; 2; 3) angeordnet wird, in dem sich austretender Wasserstoff konzentrieren kann, und wobei in dem Sorptionsmittel (10.1, 10.2; 11; 12; 13) mit mindestens einem Temperatursensor (17.1, 17.2; 18; 19; 20, 21; 22) die Temperatur gemessen und an eine Sicherheitselektronik (25) weitergeleitet wird. Die vorliegende Erfindung ermöglicht eine sichere und wartungsarme Überwachung von mit Wasserstoff betreibbaren Einrichtungen auf Leckagen und mindert gleichzeitig die Risiken einer auftretenden Leckage. Zudem wird die Verwendung eines Sorptionsmittels (10.1, 10.2; 11; 12; 13) an einer mit Wasserstoff betreibbaren Einrichtung (1; 2; 3) zum Auffangen oder Speichern einer Wasserstoffleckage vorgeschlagen.

## Beschreibung

Die Erfindung betrifft ein Verfahren und eine Anordnung zur Erkennung einer Wasserstoffleckage in einer mit Wasserstoff betreibbaren Einrichtung. Weiterhin wird auch ein Computerprogrammprodukt zur Ausführung des Verfahrens angegeben. Zudem wird eine Verwendung eines Sorptionsmittels an einer mit Wasserstoff betreibbaren Einrichtung angegeben.

Wasserstoff als Brenngas oder als Beimischung zu Brenngasen wird immer wichtiger, und es werden große Anstrengungen unternommen, neue oder auch existierende Heizgeräte für einen Betrieb damit zu ertüchtigen. Dabei geht es nicht nur um große Anlagen, sondern auch um Wandgeräte zur Erwärmung von Wasser und generell um Heizgeräte für die Beheizung von Gebäuden und/oder die Bereitstellung von warmem Wasser.

Zum Schutz des Weltklimas wird in Zukunft zumindest in einigen Ländern eine Neuinstallation oder ein Austausch von Ölheizungen untersagt oder stark eingeschränkt werden. Es bedarf dann einer nachhaltigen Ersatzlösung. Wasserstoff ist ein Energieträger, welcher aus erneuerbaren Energien hergestellt und transportiert sowie gelagert werden kann. Eine Möglichkeit dazu ist, eine Ölheizung z. B. durch ein zu 100% mit Wasserstoff betreibbares Brennwertheizgerät zu ersetzen, welches den Wasserstoff aus Gastanks bezieht. Solche Wasserstofftanks können z.B. in einem ehemaligen Öltankraum untergebracht werden.

Generell werden in Zukunft verstärkt Heizgeräte, insbesondere Brennwertheizgeräte, eingesetzt werden, die mit reinem Wasserstoff oder in einer Übergangszeit mit wasserstoffhaltigem (Erd-)Gas betrieben werden. Je größer der Anteil von Wasserstoff bei der Verbrennung ist, desto weniger Kohlendioxid wird erzeugt und in die Umgebung freigesetzt.

Wasserstoff ist jedoch auf Grund seiner Brennbarkeit und seiner Eigenschaft, mit Luft ein explosives Gemisch bilden zu können, als Gefahrstoff eingestuft, was besondere Vorsichtsmaßnahmen gegen einen ungewollten Austritt und dessen eventuelle Folgen erforderlich macht. Dies muss bei allen mit Wasserstoff betreibbaren Einrichtungen beachtet werden, insbesondere bei geschlossenen Räumen oder Gehäusen, in denen solche Einrichtungen untergebracht sind. Dies gilt insbesondere für Aufstellräume von Wasserstofftanks, z. B. ehemalige Öltankräume in Kellern oder unter der Erde, und für Gehäuse, in denen z. B. Heizgeräte angeordnet sind. Ein Austritt von Wasserstoff kann zu einem explosiven Gemisch mit Luft führen, was durch geeignete Maßnahmen verhindert werden muss.

Bisher werden daher an Stellen, an denen sich auf Grund einer Leckage austretender Wasserstoff ansammeln kann (typischerweise steigt Wasserstoff auf, weil er leichter als Luft ist und sammelt sich in einem oberen Bereich eines Raumes an) elektrochemische Wasserstoff-Sensoren eingesetzt. Ein solcher elektrochemischer GasSensor ist z. B. aus der EP 0 994 347 A2 bekannt. Es reicht allerdings nicht aus, eine Leckage nur festzustellen, es müssen auch noch Maßnahmen getroffen werden, ausgetretenen Wasserstoff gefahrlos zu beseitigen.

Öltankräume oder Heizgeräte mit ihren Gehäusen befinden sich in der Regel in einem Keller eines Gebäudes und gelten als nicht besonders sauber. Elektrochemische Sensoren sind jedoch anfällig für Verschmutzungen und müssen regelmäßig gewartet werden. Die Absicherung einer mit Wasserstoff betreibbaren Einrichtung mit elektrochemischen Gassensoren bei ungewolltem Gasaustritt ist möglich, erfordert aber die regelmäßige Kontrolle und Kalibrierung von eingesetzten Sensoren durch Fachpersonal. Dies führt zu hohen Wartungskosten. Zudem verhindert ein Gassensor nicht die Ansammlung gefährlicher Konzentrationen in einem Raum. Dieser würde zwar eine Wasserstoffleckage erkennen, jedoch bedarf es in diesem Fall eines zweiten Sicherheitsorgans, um eine Wasserstoffansammlung auch zu beseitigen, z.B. einer explosionsgeschützten Entlüftungsanlage. Diese wäre in der Lage, den freigesetzten Wasserstoff in die Umgebung abzuführen. Solche Entlüftungsanlagen sind Stand der Technik, erfordern aber ebenfalls eine regelmäßige Wartung.

Wasserstoff wird außerdem möglicherweise in einer zukünftigen Wasserstoffinfrastruktur mit Odorstoffen versetzt sein. Diese Odorierung dient, wie heute bei Erdgas, dazu, eine Leckage mit der Nase wahrnehmen zu können. Durch diese Odorierung des Wasserstoffes werden Bewohner vor ungewolltem Wasserstoffaustritt gewarnt und können Gegen- sowie Abstellmaßnahmen ergreifen oder das Gebäude verlassen. Solche Odorierungsmittel können jedoch schwefelhaltig sein, was elektrochemischen Gassensoren schadet, wodurch deren Anwendbarkeit als Wasserstoffsensor weiter eingeschränkt wird.

Aufgabe der vorliegenden Erfindung ist es, die mit Bezug auf den Stand der Technik geschilderten Probleme wenigstens teilweise zu lösen. Insbesondere sollen ein Verfahren und eine Anordnung sowie ein Computerprogrammprodukt zur Erkennung einer Wasserstoffleckage in einer mit Wasserstoff betreibbaren Einrichtung geschaffen werden, die wenig Wartung erfordern und das Risiko einer Wasserstoffleckage auch ohne Entlüftungsanlage verringern. Weiter sollen die mit Wasserstoff betreibbaren Einrichtung sicherer werden und/oder einen einfacheren Abtransport des Wasserstoffes nach einer Leckage ermöglichen.

Zur Lösung dieser Aufgabe dienen ein Verfahren und eine Anordnung, ein Computerprogrammprodukt sowie eine Verwendung gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit der Zeichnung, veranschaulicht die Erfindung und gibt weitere Ausführungsbeispiele an.

Hierzu trägt ein Verfahren bei zur Erkennung einer Wasserstoffleckage in einer mit Wasserstoff betreibbaren Einrichtung, wobei eine vorgebbare Menge an Sorptionsmittel für Wasserstoff in mindestens einem Bereich der Einrichtung angeordnet wird, in dem sich austretender Wasserstoff konzentrieren kann, und wobei in dem Sorptionsmittel mit mindestens einem Temperatursensor die Temperatur gemessen und an eine Sicherheitselektronik weitergeleitet wird.

Wasserstoff ist leichter als Luft und steigt in Luft auf, so dass sich typischerweise oben in einem (teilweise) geschlossenen Raum oder jedenfalls oberhalb einer Leitung, eines Reservoirs bzw. eines Lecks Wasserstoff ansammelt bzw. konzentriert, der dort am schnellsten detektiert werden kann. In einem solchen Bereich kann daher eine vorgebbare Menge an Sorptionsmittel vorgesehen sein.

Insbesondere kann die Menge des Sorptionsmittels derart vorgegeben werden bzw. sein, dass das Sorptionsmittel einen großen Teil, bevorzugt 50 bis 90%, insbesondere bevorzugt über 90% des austretenden bzw. ausgetretenen Wasserstoffs in einer Mindestdauer von 10 Sekunden, bevorzugt von mindestens 5 oder sogar mindestens 10 Minuten aufnehmen kann. Das Sorptionsmittel ist demnach insbesondere nicht nur (kurzzeitig) durchströmbar sondern (auch) zur (dauerhaften und) umfassenden Einlagerung des Wasserstoffs vorgesehen und eingerichtet. Somit kann eine weitere Ausbereitung des Wasserstoffs innerhalb der Einrichtung und des (fast) geschlossenen Raums unterbunden werden, bevor eine Sicherheitsmaßnahme ergriffen wird. Dies bedeutet mit anderen Worten insbesondere, dass austretender Wasserstoff nicht nur durch das Sorptionsmittel aufgenommen, sondern auch durch die Temperatursteigerung des Sorptionsmittel nach dem Aufnehmen detektiert werden kann. Darüber hinaus kann das Sorptionsmittel nach dem Verbrauch bzw. wenn dieses mit Wasserstoff "gefüllt" ist ausgetauscht werden. Hierfür dann das Sorptionsmittel unabhängig von der Einrichtung hergestellt und dann integriert werden.

Geeignete Sorptionsmittel für Wasserstoff sind gut bekannt und erforscht.. Hierbei gibt es Adsorptionsmittel, bei denen eine Anlagerung an der Oberfläche zumeist durch Physisorption erfolgt, und Absorptionsmittel, bei denen der Wasserstoff insbesondere in einem Metallkristall gelöst wird. Insbesondere eignen sich metallorganische Gerüste bzw. metallorganische Gerüstverbindungen (englisch: metal-organic frameworks, MOFs) für die hier beschriebene Anwendung. Dies sind mikroporöse Materialien, die aus anorganischen Baueinheiten, den sogenannten "Inorganic Building Units" (IBUs) und organischen Molekülen als Verbindungselementen ("Linkers") zwischen den anorganischen Baueinheiten aufgebaut sind.

Metall-organische Gerüste sind oft, aber nicht notwendigerweise, kristallin. MOFs sind sogenannte Koordinationspolymere (genauer: Koordinationsnetzwerke) mit einem offenen Gerüst, welches mögliche Poren enthält. MOFs basieren üblicherweise auf Werner-Komplexen. Die Poren der dreidimensionalen Strukturen sind nach der Synthese meist mit Gastmolekülen (z.B. Lösungsmittel oder nicht umgesetzte Linker) gefüllt. Durch die Entfernung der Gastmoleküle (z.B. durch Ausheizen, im Vakuum oder durch Kombination von beidem) können die Poren zugänglich gemacht werden. Anwendungsgebiete finden sich bisher in der Gasspeicherung (z.B. Wasserstoff, Methan), Stofftrennung, Sensorik und Katalyse. Hier kommt es hauptsächlich auf die Eigenschaft an, dass bei der Adsorption von Wasserstoff Energie in Form von Wärme frei wird, was als Temperaturerhöhung gemessen werden kann. Sorptionsmittel lassen sich als Formkörper (mit integrierten Temperatursensoren) oder als Schüttungen in einem Behälter mit gasdurchlässigen Wänden realisieren. In beiden Fällen ist bei Bedarf ein Austausch von Sorptionsmittel (oder eine Regenerierung) leicht zu verwirklichen.

Als Sorptionsmittel (Adsorptionsmittel bzw. Absorptionsmittel) kommt beispielsweise mindestens eines der folgenden Aufzählung in Betracht:
- Aktivkohle oder metalldotierte Aktivkohlen;
- Zeolithe, insbesondere aluminosilikat-basierte Zeolithe, wie z.B. ZSM-5;
- Metall-organische Rahmengerüstverbindungen (MOF), insbesondere MOF 177, welcher aus (Zn4O)-Clustern besteht, oder carboxylatbasierten MOFs. In der EP 2 098 530 B1 sind beispielsweise Verfahren zur Herstellung von MOF für die Wasserstoffspeicherung beschrieben;
- Kovalente Organische Rahmengerüstverbindungen (Covalent organic framework - COF), insbesondere 3-D COF sind ebenfalls Kandidaten für die Wasserstoffspeicherung sowie die Verbindungen COF 102, 103 und COF202, welche für den Einsatz bei Raumtemperaturen gut geeignet sind. Außerdem kommt die Nutzung von metallisierten COF in Betracht, insbesondere mit Alkali- und Erdalkalimetallen;
- Siliciumkarbid (SiC2) Nanoröhrchen;
- Titandixoid (TiO2) Nanoröhrchen; und
- Metall-Hydride: Natrium-Bor-Verbindungen sowie Titan-Verbindungen sind bekannt dafür, dass diese Hydride mit Wasserstoff bilden. In der EP 2 839 046 B1 sind solche Legierungen für die Wasserstoffspeicherung bzw. Wasserstoffadsorption beschrieben. Auch Magnesium bildet mit Wasserstoff Metallhydride aus.

Soweit wasserstoffspeicherfähige Metallverbindungen hierfür geeignet sind, sollen diese jedoch nicht (nur) in Form einer Legierung eines Metalls oder als (dünne) Oberflächenschicht vorliegen, insbesondere weil diese regelmäßig nicht die Kapazität haben, den hier ggf. auftretenden Wasserstoff in ausreichendem Maße zu speichern. Solche Metalllegierungen sind zudem kostspielig, und nehmen den Wasserstoff relativ langsam auf, so dass in den beschriebenen Situationen austretender bzw. ausgetretener Wasserstoff nicht schnellstmöglich bzw. nicht zeitgerecht aufgenommen werden kann.

Die Einrichtung kann ein Aufstellraum für einen oder mehrere Wasserstofftanks sein, wobei das Sorptionsmittel zumindest in einem oberen Bereich des Aufstellraumes oder zumindest in einem oberen Bereich außen an einem Wasserstofftank angeordnet wird bzw. ist. So kann austretender Wasserstoff effektiv vom Sorptionsmittel aufgenommen und damit schnell und sicher detektiert werden, entweder direkt nahe dem Ort einer (potenziellen) Leckage oder in dem Bereich, wo sich Wasserstoff im Aufstellraum sammelt, unabhängig davon, wo eine Leckage aufgetreten ist.

Die Einrichtung kann (ggf. alternativ) ein mit Wasserstoff betreibbares Heizgerät in einem Gehäuse umfassen bzw. sein, wobei das Sorptionsmittel zumindest in einem oberen Bereich des Gehäuses angeordnet wird. So lassen sich Leckagen im gesamten Heizgerät und den zugehörigen Leitungen im Gehäuse detektieren, weil ein großer Teil von austretendem Wasserstoff das Sorptionsmittel erreicht und dort adsorbiert wird.

Die Einrichtung kann (ggf. alternativ) eine Leitung für Wasserstoff oder ein Leitungssystem (z. B. mit Flanschen, Verbindungen, Armaturen etc.) umfassen bzw. sein, wobei die Leitung bzw. das Leitungssystem zumindest in einem Teilbereich von dem Sorptionsmittel umhüllt ist. Auf diese Weise wird austretender Wasserstoff sofort adsorbiert und kann durch Temperaturerhöhung des Sorptionsmittels detektiert werden.

Bevorzugt wird eine Erhöhung der Temperatur an dem mindestens einen Temperatursensor über einen vorgebbaren Schwellwert und/oder die Überschreitung des Transienten der Temperatur (Schnelligkeit des Temperaturanstiegs) über einen vorgebbaren Schwellwert als Hinweis auf eine Wasserstoffleckage interpretiert. Der Schwellwert kann mittels eines Datenspeichers verfügbar gemacht werden und/oder ein (ermittelter) Mittelwert über einen vorgebbaren Zeitraum sein.

Besonders bevorzugt wird die Temperatur an zwei oder mehr Temperatursensoren gemessen. Dies ermöglicht im einfachsten Fall eine gewisse Lokalisierung einer Leckage, sofern die Temperatursensoren an unterschiedlichen Orten angeordnet sind. Ein näher an einer Leckage befindlicher Temperatursensor wird stärker reagieren als ein entfernterer. Dies kann bedeuten, dass die Temperatursensoren im Sorptionsmittel räumlich unterschiedlich verteilt angeordnet sind. Somit kann durch die Temperaturdifferenz zwischen den Temperatursensoren nicht nur die Leckage selbst, sondern auch die Position der Leckage genauer bestimmt werden. Außerdem ist es vorteilhaft, dass die Leckage beim Ausfall eines Temperatursensors trotzdem mit anderen Temperatursensoren detektiert werden kann.

Es sei erwähnt, dass es auch sinnvoll sein kann, einen weiteren Temperatursensor als Referenzsensor in der Umgebung aber außerhalb des Sorptionsmittels anzuordnen, der ebenfalls (über eine Messleitung) mit der Sicherheitselektronik verbunden ist. Dieser Referenzsensor liefert eine nicht von einer Leckage beeinflusste Temperatur, die im Wesentlichen der Temperatur in dem Aufstellraum oder Gehäuse entspricht, so dass nur die Differenz von in dem Sorptionsmittel gemessenen Temperaturen und einer mit dem Referenzsensor gemessenen Referenztemperatur bei der Interpretation der Daten betrachtet werden muss.

Insbesondere kann das Sorptionsmittel ein vorgebbares Volumen mit einer Oberfläche ausfüllen, wobei die Temperatur(en) an einem äußeren Temperatursensor nahe der Oberfläche des Volumens und an einem inneren Temperatursensor weiter von der Oberfläche entfernt im Inneren des Volumens gemessen werden. Dies erlaubt einen Rückschluss auf die Größe (oder die Dauer) einer Leckage. Austretender Wasserstoff wird zunächst nahe der Oberfläche adsorbiert und erhöht dort die Temperatur. Ist ein Oberflächenbereich mit Wasserstoff gesättigt, so verlagert sich die Adsorption weiter in das Innere des Volumens und erhöht dort die Temperatur. Dieser Effekt kann von der Sicherheitselektronik ausgewertet werden, wodurch z. B. auf die austretende Menge an Wasserstoff pro Zeiteinheit geschlossen werden kann.

Zur Lösung der Aufgabe dient auch eine Anordnung zur Erkennung einer Wasserstoffleckage in einer mit Wasserstoff betreibbaren Einrichtung, wobei ein Sorptionsmittel für Wasserstoff in mindestens einem Bereich der Einrichtung angeordnet ist, in dem sich eine erhöhte Konzentration von austretendem Wasserstoff bilden kann, und wobei in dem Sorptionsmittel mindestens ein Temperatursensor vorhanden ist, der mit einer Sicherheitselektronik verbunden ist. Die Sicherheitselektronik kann als separate Einheit gestaltet sein, wird aber in vielen Fällen Teil einer größeren Elektronik zur Regelung und Steuerung eines Heizgerätes oder einer ähnlichen Einrichtung sein. Im letzteren Fall kann die Sicherheitselektronik Warn-, Anzeige- und/oder Kommunikationskomponenten der größeren Elektronik mitbenutzen.

Bevorzugt ist die Einrichtung ein Aufstellraum für einen oder mehrere Wasserstofftanks, wobei das Sorptionsmittel zumindest in einem oberen Bereich des Aufstellraumes oder zumindest in einem oberen Bereich außen an einem Wasserstofftank angeordnet ist. Insbesondere ehemalige Öltankräume, die auf Wasserstoffbevorratung umgerüstet werden, befinden sich in der Regel im Keller eines Gebäudes und gelten als nicht besonders sauber. Elektrochemische Sensoren wären anfällig für Verschmutzungen und müssten regelmäßig gewartet werden. Eine Absicherung mit elektrochemischen Gassensoren gegen ungewollten Wasserstoffaustritt wäre möglich, würde aber regelmäßige Kontrollen und Kalibrierung der Sensoren durch Fachpersonal (an möglicherweise schwer zugänglichen Stellen) erfordern. Zudem würde ein elektrochemischer Gassensor nicht die Ansammlung gefährlicher Konzentrationen von Wasserstoff im Aufstellraum verhindern. Dieser würde zwar eine Wasserstoffleckage erkennen, es wäre jedoch ein zweites Sicherheitsorgan erforderlich, um Wasserstoffansammlungen zu beseitigen, z.B. eine explosionsgeschützte Entlüftungsanlage. Diese wäre in der Lage, den freigesetzten Wasserstoff in die Umgebung abzuführen. Solche bekannten Entlüftungsanlagen erfordern ebenfalls eine regelmäßige und kostenintensive Wartung. Bei Verwendung von Sorptionsmittel mit Temperatursensor ist kaum Wartung erforderlich und austretender Wasserstoff wird außerdem adsorbiert und dadurch zumindest für eine gewisse Zeitspanne unschädlich gemacht.

Alternativ oder additiv ist die Einrichtung ein mit Wasserstoff betreibbares Heizgerät in einem Gehäuse, wobei das Sorptionsmittel zumindest in einem oberen Bereich des Gehäuses angeordnet ist. Die oben beschriebenen Vorteile ergeben sich auch hier, und eine sichere Detektion von Wasserstoffleckagen sowie eine Verhinderung von gefährlichen Wasserstoffkonzentrationen im Gehäuse können so erreicht werden.

Weiterhin kann die Einrichtung eine Leitung oder ein Leitungssystem sein, wobei mindestens ein Teilbereich mit Sorptionsmittel umhüllt ist. Das beschriebene Prinzip lässt sich so auch zur Leckage-Detektion bei Wasserstoff führenden Leitungen anwenden. Eine vollständige Umhüllung ist tatsächlich nicht erforderlich, es reicht aus, wenn beispielsweise Halbschalen aus Sorptionsmittel die Oberseite von Leitungen abdecken, da austretender Wasserstoff zu diesen aufsteigt. Auch braucht nicht die ganze Länge von Leitungen überwacht zu werden. Es kann ausreichen, wenn kritische Teilbereiche (z. B. Verbindungsstellen, Ventile oder dergleichen) überwacht werden. Insbesondere ist das Sorptionsmittel lösbar, austauschbar, sicherheitsmaßnahmenbezogen wahlweise anordenbar und unabhängig von der Einrichtung herstellbar. Insbesondere ist das Sorptionsmittel in der Lage, einen großen Teil, bevorzugt (mindestens) 50 bis 90%, besonders bevorzugt über 90% des austretenden Wasserstoffs in einer Mindestdauer von 10 Sekunden, bevorzugt über einen Zeitraum von 5 bis 10 Minuten aufzunehmen bzw. speichern.

Bevorzugt füllt das Sorptionsmittel ein vorgebbares Volumen mit einer Oberfläche aus, wobei in dem Volumen mindestens zwei Temperatursensoren angeordnet sind. Ein Vergleich der Messwerte aller Sensoren kann so zunächst Hinweise auf den Ort einer Leckage liefern.

Wenn insbesondere ein äußerer Temperatursensor nahe der Oberfläche des Volumens und ein innerer Temperatursensor weiter von der Oberfläche entfernt im Inneren des Volumens angeordnet sind, können aus deren Messwerten auch Informationen über die Größe eines Lecks oder die Dauer einer Leckage gewonnen werden.

Ein weiterer Aspekt betrifft auch ein Computerprogrammprodukt, umfassend Befehle, die bewirken, dass die beschriebenen Anordnungen die beschriebenen Verfahren ausführen. Die Auswertung der von Sensoren gemessenen Daten und deren weitere Verwendung zur Erhöhung der Sicherheit im System benötigen ein Programm und Daten, wobei beides gelegentlich aktualisiert werden muss.

Die Erläuterungen zum Verfahren können zur näheren Charakterisierung der Anordnung herangezogen werden, und umgekehrt. Die Anordnung kann auch so eingerichtet sein, dass damit das Verfahren durchgeführt wird.

Einem weiteren Aspekt folgend wird die Verwendung eines Sorptionsmittels an einer mit Wasserstoff betreibbaren Einrichtung zum Auffangen oder Speichern von Wasserstoff aus einer Leckage vorgeschlagen. Die Verwendung ist bevorzugt bei (eingehausten) Einrichtungen, die (flüssigen oder gasförmigen) Wasserstoff führen, speichern und/oder verarbeiten, wie z. B. Tanks, Leitungen, Brenner. Die Verwendung dient insbesondere auch zum Abtransport von aus der Einrichtung ausgetretenem Wasserstoff nach dessen Auffangen bzw. Speichern, insbesondere bei Einrichtungen die sich in geschlossenen Räumen, z.B. unterirdisch, befinden. Die Verwendung dient ggf. auch zur Erkennung bzw. Detektion einer Wasserstoffleckage, wobei eine Leckageerkennungssensorik (z.B. ein Verbrauchsmelder, ein Wasserstoff-Gassensor und/oder ein Temperatursensor) vorgesehen sein kann. Die Erläuterungen zum Verfahren bzw. der Anordnung können zur näheren Charakterisierung der Verwendung herangezogen werden, und umgekehrt.

Gemäß noch einem weiteren Aspekt wird eine mit Wasserstoff betreibbare Einrichtung vorgeschlagen, wobei ein Sorptionsmittel für Wasserstoff in mindestens einem Bereich der Einrichtung angeordnet ist, in dem sich eine erhöhte Konzentration von austretendem Wasserstoff bilden kann. Die Einrichtung ist im Betrieb regelmäßig zumindest teilweise von Wasserstoff befüllt, kann also insbesondere (flüssigen oder gasförmigen) Wasserstoff führen, speichern und/oder verarbeiten, wie z. B. ein Tank, eine Leitung, ein Brenner, etc.. Daher bildet die Einrichtung einen abgeschlossenen Strömungsbereich für den Wasserstoff aus. Falls Wasserstoff (ungewünscht) diesen vorgegebenen geschlossenen Strömungsbereich verlassen sollte, ist bei der Einrichtung ein Sorptionsmittel für Wasserstoff vorgesehen, der diesen austretenden Wasserstoff (Leckage) auffängt bzw. einlagert. Dazu kann das Absorptionsmittel den Strömungsbereich teilweise bzw. (abschnittsweise) vollständig umschließen und/oder in dessen Nachbarschaft angeordnet sein, wo der Wasserstoff hin entweichen bzw. sich sammeln würde.

Es ist möglich, dem Absorptionsmittel eine Sicherheitselektronik zuzuordnen, die eingerichtet ist, eine Leckage und/oder eine Einlagerung von Wasserstoff in dem Absorptionsmittel zu erkennen. In einem Fall kann ein Verbrauchs- und/oder Füllstandsdetektor mit einbezogen sein, mit dem eine Leckage erfasst wird. Es ist alternativ oder kumulativ möglich, einen (Wasserstoff-)Gassensor und/oder einen Temperatursensor vorzusehen, der ausgetretenen Wasserstoff detektieren kann.

Die Erläuterungen zur Verwendung, zum Verfahren und/oder zur Anordnung zur Erkennung einer Wasserstoffleckage können zur näheren Charakterisierung dieser Einrichtung herangezogen werden, und umgekehrt.

Zur Lösung der eingangs geschilderten Probleme kann auch ein Temperatursensor, zumindest teilweise umgeben von einem Sorptionsmittel, insbesondere für Wasserstoff, beitragen. Das Sorptionsmittel kann gemeinsam mit dem Temperatursensor austauschbar sein. Es ist möglich, dass der Temperatursensor von dem Sorptionsmittel umgossen oder in einem Formkörper aus Sorptionsmittel integriert ausgeführt ist. Zur Charakterisierung des Sorptionsmittels kann vollumfänglich auf die vorstehenden Erläuterungen zurückgegriffen werden. Auch die Verwendung eines solchen Temperatursensors, welcher eingebettet ist in ein Sorptionsmittel, zur Erkennung einer Wasserstoffleckage in einer mit Wasserstoff betreibbaren Einrichtung kann sehr vorteilhaft sein.

Ein schematisches Ausführungsbeispiel der Erfindung, auf das diese jedoch nicht beschränkt ist, und die Funktionsweise des Verfahrens werden nun anhand der Zeichnung näher erläutert. Es stellt dar:

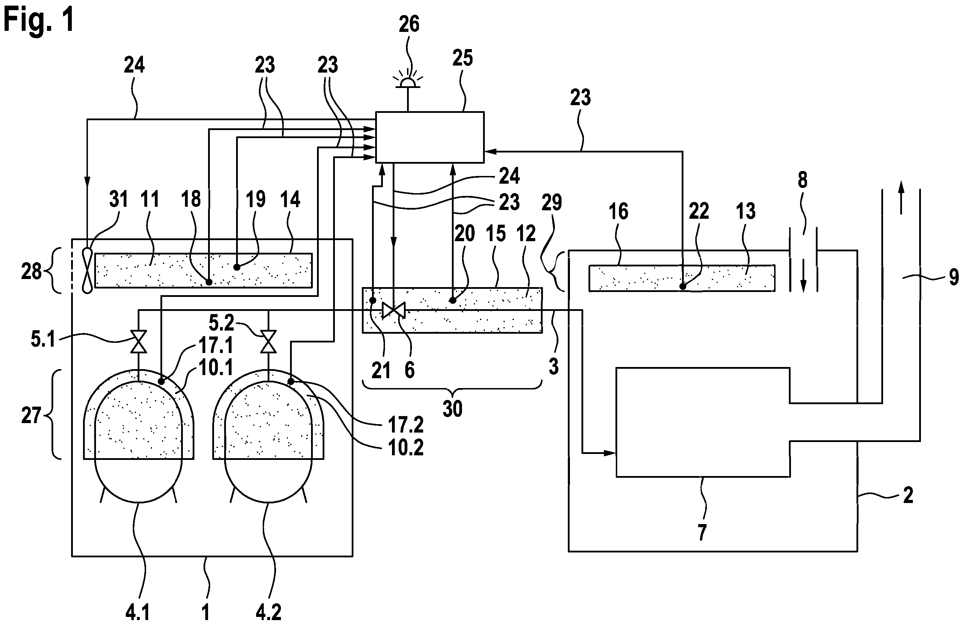

- Fig. 1:: ein System aus Aufstellraum für Wasserstofftanks und Heizgerät in einem Gehäuse, wobei an verschiedenen Positionen ein Absorptionsmittel vorgesehen ist und/oder eine Leckage-Detektion durchgeführt wird.

Fig. 1 zeigt schematisch mehrere verschiedene Ausführungsbeispiele der Erfindung, die einzeln oder gemeinsam Anwendung finden können. Zunächst ist in Fig. 1 schematisch ein Aufstellraum 1 dargestellt, der insbesondere ein ehemaliger Tankraum für einen Öltank, beispielsweise im Keller eines Gebäudes sein kann. In diesem Aufstellraum 1 sind (z. B. nach einer Umrüstung einer ehemaligen Ölheizung) einer oder mehrere Tanks 4.1, 4.2 für Wasserstoff angeordnet. Diese sind über Tankventile 5.1, 5.2 an eine Leitung 3 angeschlossen. Ein Absperrventil 6 kann diese Leitung 3 schließen. Falls in dem Aufstellraum 1 Wasserstoff aus einem der Tanks 4.1, 4.2 austritt, steigt dieser im Wesentlichen nach oben, da Wasserstoff leichter als Luft ist. Eine Sorptionsmittel-Schicht 10.1, 10.2 zumindest an einem oberen Bereich 27 jedes Tanks 4.1, 4.2 nimmt austretenden Wasserstoff auf und erwärmt sich dabei. Dies wird mit einem Temperatursensor 17.1, 17.2 gemessen und über Messleitungen 23 an eine Sicherheitselektronik 25 weitergeleitet. Überschreitet die gemessene Temperatur einen vorgebbaren Schwellwert oder steigt die Temperatur schneller an als ein vorgebbarer Schwellwert, so löst die Sicherheitselektronik 25 eine Warneinrichtung 26 aus. Dies kann eine Warnanzeige und/oder ein (optisches oder akustisches) Warnsignal sein oder auch eine Meldung an eine Zentrale über einen geeigneten Kommunikationskanal. Außerdem können weitere Sicherheitsmaßnahmen über Steuerleitungen 24 eingeleitet werden, beispielsweise Schließen von Tankventilen 5.1, 5.2 oder Belüftung des Aufstellraumes 1 mittels eines Lüfters 31. Es sei aber erwähnt, dass das Sorptionsmittel 10.1, 10.2 gewisse Mengen an Wasserstoff, wie sie bei einer Leckage auftreten können, bindet und diese daher kein explosives Gemisch mit der Luft im Aufstellraum 1 bilden können. So wird eine Leckage nicht nur erkannt, sondern auch sicher beherrscht, jedenfalls für einen gewissen Zeitraum.

Statt Sorptionsmittel direkt an den Tanks 4.1, 4.2 anzuordnen (oder zusätzlich) kann auch Sorptionsmittel 11 in einem ersten Volumen 14 in einem oberen Bereich 28 des Aufstellraumes 1 angeordnet werden. Dies erlaubt auch die Erkennung von Leckagen z. B. in Leitungen oder Tankventilen 5.1, 5.2 oberhalb der Tanks 4.1, 4.2. Aufsteigender Wasserstoff wird in dem Sorptionsmittel 11 zunächst an einer Oberfläche des Volumens 14 adsorbiert. Ein äußerer Temperatursensor 18 spricht daher schneller und/oder stärker auf eine Leckage an als ein innerer Temperatursensor 19, der weiter entfernt von der Oberfläche im Inneren des ersten Volumens 14 angeordnet ist. Dies kann von der Sicherheitselektronik 25, an die die Temperaturmesswerte über Messleitungen 23 weitergeleitet werden, genutzt werden, um eine Information über die Größe eines Lecks, also die pro Zeiteinheit austretende Menge an Wasserstoff zu gewinnen. Wiederum können bei Feststellung einer Leckage alle beschriebenen Maßnahmen eingeleitet werden. Auf diese Weise kann ein ehemaliger Tankraum für einen Öltank zu einem sicheren Aufstellraum für Tanks 4.1, 4.2 für Wasserstoff werden. Da zunächst praktisch aller austretende Wasserstoff adsorbiert wird, besteht auch kein Risiko der Bildung eines explosiven Gasgemisches in dem Aufstellraum1. Das Sorptionsmittel 11 kann auswechselbar oder regenerierbar angeordnet werden. Das Volumen 14 kann dazu beispielsweise komplett austauschbar sein oder Möglichkeiten zum Austauschen seines Inhaltes aufweisen. Alle Arten und Formen von Sorptionsmittel wie oben beschrieben sind anwendbar.

Das gleiche Prinzip der Leckage-Erkennung kann alternativ oder additiv auch für andere Einrichtungen genutzt werden. Wie ebenfalls in Fig. 1 dargestellt kann auch der Innenraum eines Gehäuses 2 mit einem darin angeordneten Heizgerät 7, z. B. einem Brennwertgerät, welches mit Wasserstoff betreibbar ist, auf austretenden Wasserstoff überwacht werden. In das Gehäuse 2 tritt typischerweise irgendwo durch eine Luftzuführung 8 Luft ein und in dem Heizgerät 7 entstehende Abgase werden über eine Abgasanlage 9 abgeführt. Tritt irgendwo jedoch Wasserstoff aus, so sammelt sich dieser wiederum in einem oberen Bereich 29 des Gehäuses 2 an. Zur Leckage-Erkennung wird dort ein vorgebbares drittes Volumen 16 mit Sorptionsmittel 13 angeordnet, wobei mindestens ein Temperatursensor 22 in dem Sorptionsmittel 13 vorhanden ist. Bei austretendem Wasserstoff meldet der Temperatursensor 22 eine erhöhte Temperatur an die Sicherheitselektronik 25, die dann wiederum eine oder mehrere der oben beschriebenen Maßnahmen auslösen kann. Anders als in einem Aufstellraum 1 mit Tanks 4.1, 4.2 ist die Menge an zu erwartendem Wasserstoff bei einer Leckage in dem Gehäuse 2 sehr gering und kann z. B. durch Schließen des Absperrventils 6 schnell begrenzt werden. Dies kann bei den verwendeten Mengen an Sorptionsmittel entsprechend berücksichtigt werden. Auch hier gilt aber, dass nicht nur eine Leckage festgestellt werden kann, sondern dass auch das Risiko der Bildung eines explosiven Gemisches stark verringert wird.

Schließlich kann das beschriebene Prinzip auch für die Leckage-Überwachung an Leitungen 3 oder Leitungssystemen, die aus mehreren Leitungsstücken mit oder ohne Armaturen bestehen können, Anwendung finden. Zumindest in einem Teilbereich 30 einer Leitung 3 (oder eines Leitungssystems) kann Sorptionsmittel 12 in einem zweiten Volumen 15 so angeordnet werden, dass es die Leitung 3 umschließt (oder zumindest so umfasst, dass austretender und aufsteigender Wasserstoff in das Sorptionsmittel 12 gelangt). Leckagen können wiederum durch Temperaturerhöhungen an einem ersten Temperatursensor 20 und einem zweiten Temperatursensor 21 erkannt werden. Hier ist es von besonderem Vorteil, zwei oder mehrere Sensoren 20, 21 entlang einer Leitung 3 anzuordnen, um auch eine Information über den Ort einer Leckage zu gewinnen.

Generell gilt, dass Temperatursensoren wartungsarm und über lange Zeiträume stabil funktionieren. Je mehr Temperatursensoren in dem Sorptionsmittel verteilt angeordnet werden, desto zuverlässiger ist die Leckage-Detektion und desto besser können Informationen über Ort und/oder Größe einer Leckage gewonnen werden. Die hier bei einzelnen Anwendungsfällen beschriebenen Ausführungsformen und Vorteile sind jeweils in gleicher Weise auch auf die anderen Anwendungsfälle übertragbar. Die Erfindung kann für Aufstellräume 1, Gehäuse 2 oder Leitungen 3 einzeln eingesetzt werden, also auch für Gehäuse 2 von Heizgeräten 7, die aus einem Versorgungsnetz mit Brenngas versorgt werden. Eine Kombination wie dargestellt ist aber möglich und vorteilhaft.

Grundsätzlich kann das Absorptionsmittel 11, 12, 13 auch ohne eine Überwachungsfunktionalität an den veranschaulichten Stellen positioniert sein. Dann dient das Absorptionsmittel 11, 12, 13 "nur" als Speicher und ggf. Transportmedium für ausgetretenen Wasserstoff.

Die vorliegende Erfindung ermöglicht eine sichere und wartungsarme Überwachung von mit Wasserstoff betreibbaren Einrichtungen auf Leckagen und mindert gleichzeitig die Risiken einer auftretenden Leckage.

### Bezugszeichenliste

- 1: Aufstellraum
- 2: Gehäuse
- 3: Leitung(ssystem)
- 4: 4.1, 4.2 Wasserstofftank
- 5: 5.1, 5.2 Tankventil
- 6: Absperrventil
- 7: Heizgerät (Brennwertgerät)
- 8: Luftzuführung
- 9: Abgasanlage
- 10: 10.1, 10.2 Sorptionsmittel-Schicht
- 11: Sorptionsmittel (für Wasserstoff)
- 12: Sorptionsmittel
- 13: Sorptionsmittel
- 14: Erstes Volumen im Aufstellraum
- 15: Zweites Volumen um die Leitung
- 16: Drittes Volumen im Gehäuse
- 17: 17.1, 17.2 Temperatursensor
- 18: Äußerer Temperatursensor im Aufstellraum
- 19: Innerer Temperatursensor im Aufstellraum
- 20: Erster Temperatursensor an der Leitung
- 21: Zweiter Temperatursensor an der Leitung
- 22: Temperatursensor Gehäuse
- 23: Messleitung
- 24: Steuerleitung
- 25: Sicherheitselektronik
- 26: Warneinrichtung
- 27: Oberer Bereich des Tanks
- 28: Oberer Bereich des Aufstellraumes
- 29: Oberer Bereich des Gehäuses
- 30: Teilbereich (der Leitung)
- 31: Lüfter

## Patentansprüche

1. Verfahren zur Erkennung einer Wasserstoffleckage in einer mit Wasserstoff betreibbaren Einrichtung (1; 2; 3), wobei eine vorgebbare Menge an Sorptionsmittel (10.1, 10.2; 11; 12; 13) für Wasserstoff in mindestens einem Bereich (27; 28; 29; 30) der Einrichtung (1; 2; 3) angeordnet wird, in dem sich austretender Wasserstoff konzentrieren kann, wobei in dem Sorptionsmittel (10.1, 10.2; 11; 12; 13) mit mindestens einem Temperatursensor (17.1, 17.2; 18; 19; 20, 21; 22) die Temperatur gemessen und an eine Sicherheitselektronik (25) weitergeleitet wird.

2. Verfahren nach Anspruch 1, wobei die Einrichtung ein Aufstellraum (1) für einen oder mehrere Wasserstofftanks (4.1, 4.2) ist und wobei das Sorptionsmittel (10.1, 10.2; 11) zumindest in einem oberen Bereich (28) des Aufstellraumes (1) oder zumindest in einem oberen Bereich (27) außen an einem Wasserstofftank (4.1, 4.2) angeordnet wird.

3. Verfahren nach Anspruch 1 oder 2, wobei die Einrichtung ein mit Wasserstoff betreibbares Heizgerät (7) in einem Gehäuse (2) ist und wobei das Sorptionsmittel (13) zumindest in einem oberen Bereich (29) des Gehäuses (2) angeordnet wird.

4. Verfahren nach Anspruch 1, 2 oder 3, wobei die Einrichtung eine Leitung (3) für Wasserstoff ist, wobei die Leitung zumindest in einem Teilbereich (30) von dem Sorptionsmittel (12) umhüllt ist.

5. Verfahren nach einem der vorhergehenden Ansprüche, wobei eine Erhöhung der Temperatur an dem Temperatursensor (17.1, 17.2; 18; 19; 20, 21; 22) über einen vorgebbaren Schwellwert als Hinweis auf eine Wasserstoffleckage interpretiert wird.

6. Verfahren nach einem der vorhergehenden Ansprüche, wobei die Temperatur an zwei oder mehr Temperatursensoren (18, 19; 20, 21) gemessen wird.

7. Verfahren nach Anspruch 6, wobei das Sorptionsmittel (10.1, 10.2; 11; 12; 13) ein vorgebbares Volumen (14) ausfüllt und die Temperaturen an einem äußeren Temperatursensor (18) nahe einer Oberfläche des Volumens (14) und an einem inneren Temperatursensor (19) weiter von der Oberfläche entfernt im Inneren des Volumens (14) gemessen werden.

8. Anordnung zur Erkennung einer Wasserstoffleckage in einer mit Wasserstoff betreibbaren Einrichtung (1; 2; 3), wobei ein Sorptionsmittel (10.1, 10.2; 11; 12; 13) für Wasserstoff in mindestens einem Bereich (27; 28; 29; 30) der Einrichtung (1; 2; 3) angeordnet ist, in dem sich eine erhöhte Konzentration von austretendem Wasserstoff bilden kann, und wobei in dem Sorptionsmittel (10.1, 10.2; 11; 12; 13) mindestens ein Temperatursensor (17.1, 17.2; 18; 19; 20, 21; 22) vorhanden ist, der mit einer Sicherheitselektronik (25) verbunden ist.

9. Anordnung nach Anspruch 8, wobei die Einrichtung ein Aufstellraum (1) für einen oder mehrere Wasserstofftanks (4.1, 4.2) ist und wobei das Sorptionsmittel (10.1, 10.2; 11) zumindest in einem oberen Bereich (28) des Aufstellraumes (1) oder zumindest in einem oberen Bereich (27) außen an einem Wasserstofftank (4.1, 4.2) angeordnet ist.

10. Anordnung nach Anspruch 8 oder 9, wobei die Einrichtung ein mit Wasserstoff betreibbares Heizgerät (7) in einem Gehäuse (2) ist und wobei das Sorptionsmittel (13) zumindest in einem oberen Bereich (29) des Gehäuses (2) angeordnet ist.

11. Anordnung nach Anspruch 8, 9 oder 10, wobei die Einrichtung eine Leitung (3) oder ein Leitungssystem (3, 6) ist, wobei mindestens ein Teilbereich (30) mit Sorptionsmittel (12) umhüllt ist.

12. Anordnung nach einem der Ansprüche 8 bis 11, wobei das Sorptionsmittel (10.1, 10.2; 11; 12; 13) ein vorgebbares Volumen (14; 15) mit einer Oberfläche ausfüllt, in dem mindestens zwei Temperatursensoren 18, 19; 20, 21) angeordnet sind.

13. Anordnung nach Anspruch 12, wobei ein äußerer Temperatursensor (18) nahe einer Oberfläche des Volumens (11) und ein innerer Temperatursensor (19) weiter von der Oberfläche entfernt im Inneren des Volumens (11) angeordnet sind.

14. Computerprogrammprodukt, umfassend Befehle, die bewirken, dass die Anordnung nach einem der Ansprüche 8 bis 13 das Verfahren nach einem der Ansprüche 1 bis 7 ausführt.

15. Verwendung eines Sorptionsmittels (10.1, 10.2; 11; 12; 13) an einer mit Wasserstoff betreibbaren Einrichtung (1; 2; 3) zum Auffangen oder Speichern einer Wasserstoffleckage.

16. Eine mit Wasserstoff betreibbare Einrichtung (1; 2; 3), wobei ein Sorptionsmittel (10.1, 10.2; 11; 12; 13) für Wasserstoff in mindestens einem Bereich (27; 28; 29; 30) der Einrichtung (1; 2; 3) angeordnet ist, in dem sich eine erhöhte Konzentration von austretendem Wasserstoff bilden kann.
